# EUROPEAN PATENT SPECIFICATION

(11) **EP 3 731 719 B1**
(45) Date of publication and mention of the grant of the patent: **03.01.2024**
(21) Application number: 18895853.2
(22) Date of filing: 11.10.2018
(51) Int. Cl.: A47L 15/42, A47L 15/48

(54) **A HEAT PUMP DISHWASHER WITH IMPROVED WASHING WATER HEATING PERFORMANCE**
WÄRMEPUMPENSPÜLMASCHINE MIT VERBESSERTER WASCHWASSERHEIZLEISTUNG
LAVE-VAISSELLE À POMPE À CHALEUR AYANT UNE PERFORMANCE AMÉLIORÉE DE CHAUFFAGE DE L'EAU DE LAVAGE

(30) Priority: 25.12.2017 TR 201721405
(43) Date of publication of application: 04.11.2020
(73) Proprietor: Arçelik Anonim Sirketi, 34445 Istanbul (TR)
(72) Inventor: POYRAZ, Onur, 34445 Istanbul (TR); SAGLICAN, Emre, 34445 Istanbul (TR); AYNUR, Tolga Nurettin, 34445 Istanbul (TR); YILMAZ, Zerrin, 34445 Istanbul (TR); AKKAS, Nevin, 34445 Istanbul (TR)
(86) International application number: PCT/TR2018/050588
(87) International publication number: WO 2019/132818

(56) References cited:
- EP-A1- 2 064 982
- EP-A2- 2 449 945
- EP-A2- 2 594 684
- EP-A2- 2 777 474
- WO-A1-2016/004990
- WO-A1-2016/177718
- CN-A- 106 852 673

## Description

The present invention relates to a heat pump dishwasher.

The heat pump system in the heat pump dishwashers is composed of a compressor that pressurizes the refrigerant and provides the circulation thereof, flow tubes wherein the refrigerant circulates, a condenser, an evaporator, and an expansion element. Like in the conventional dishwashers, the washing program in the heat pump dishwashers is generally composed of the steps of main washing, cold rinsing, hot rinsing and drying. In these steps, the water is heated by the heater in the conventional dishwashers, and is heated by the heat pump system in the heat pump dishwashers. The washing water accumulated in the sump under the tub is delivered to the condenser receptacle by means of the circulation pump. The water heating up in the condenser receptacle reaches the multiport valve to be directed from there to the spray arms. This cycle continues until the temperature of the washing water reaches the desired value. In the washing cycle, in some cases, for instance, when the filter is clogged due to the dirt removed from the dishes being washed in the tub or when the filter is not properly installed by the user, the circulation pump sends unfiltered dirty water to the condenser receptacle. In this case, the amount of dirt accumulating on the surface of the condenser in the form of a spirally wound pipe increases. As the level of dirtiness increases, the water heating performance of the condenser decreases, which leads to decrease the heat pump efficiency and increase the energy consumption. The accumulation of dirt on the condenser creates resistance against water flow, which in turn decreases the rpm of the spray arms and adversely affects the washing performance.

The Patent Application No. CN106852673 (A) relates to a heat pump dishwasher with improved washing performance.

The Patent Applications No. TW200727847 (A) and No. TW200727848 (A) relate to heat pump dishwashers comprising a condenser with improved heating performance.

The Patent Application No. EP2449945 (A) relates to a water-carrying household appliance, in particular a dishwasher, with a tub for holding items to be cleaned and with a process water circuit comprising a circulation line system and a circulation pump to pump process water upwards from a lower area of the tub.

The Patent Application No. WO2016004990 relates to a method of operating a dishwasher.

The Patent Application No. WO2016177718 relates to a dishwasher comprising a heat pump.

The aim of the present invention is the realization of a heat pump dishwasher wherein the condenser is prevented from getting dirty, thus increasing the washing water heating performance.

The dishwasher realized in order to attain the aim of the present invention according to claim 1 comprises a heat pump system that is composed of a compressor, a condenser, an evaporator, refrigerant flow tubes and an expansion element that together perform the refrigerant cycle. The washing water is heated by the condenser placed into a condenser receptacle. The dishwasher of the present invention comprises a condenser washing line that directs the clean water filled into the sump to the condenser receptacle through the circulation pump for the condenser washing process, and that enables the condenser to be washed by providing a continuous cycle of the water between the sump and the condenser receptacle. The condenser washing line is activated by the control unit periodically or when the level of dirtiness of the condenser is detected to increase, after the main washing process or at the beginning of the drying step in the dishwasher. In order perform the condenser washing process, first clean water is taken into the sump from the mains or from the existing water tank. The clean water can be also supplied from the evaporator condensation receptacle or from the drying duct. Afterwards, the circulation pump is operated and the third outlet of the multiport valve is opened, and the water passes through a bypass pipe connected to the third outlet so as to return to the sump and be passed through the filter.

The heat pump dishwasher realized in order to attain the aim of the present invention is illustrated in the attached figures, where:
Figure 1 - is the schematic view of the heat pump dishwasher of the present invention.
Figure 2 - is the schematic view of the heat pump dishwasher wherein water is taken from the evaporator condensation receptacle to the sump.
Figure 3 - is the schematic view of the heat pump dishwasher wherein water is taken from the drying duct to the sump.
Figure 4 - is the schematic view of the heat pump dishwasher wherein water is taken from the water tank to the sump.
Figure 5 - is the schematic view of the heat pump dishwasher wherein water is taken from the mains tap to the sump.

The elements illustrated in the figures are numbered as follows:
1. Dishwasher
2. Tub
3. Sump
4. Filter
5. Circulation pump
6. Lower spray arm
7. Upper spray arm
8. First outlet
9. Second outlet
10. Multiport valve
11. Heat pump system
12. Compressor
13. Condenser receptacle
14. Condenser
15. Evaporator
16. Evaporator fan
17. Expansion element
18. Third outlet
19. Bypass pipe
20. Condenser washing line
21. Water supply line
22. Evaporator condensation receptacle
23. Drying duct
24. Water tank
25. Mains tap

The dishwasher (1) comprises a tub (2) wherein the processes of washing, rinsing and drying are performed; a sump (3) that is disposed at the lower part of the tub (2) and wherein the washing water is collected; a filter (4) that is disposed in the sump (3) and that retains the dirt in the washing water; a circulation pump (5) that provides the delivery of the washing water in the sump (3) into the washing environment in the tub (2); a lower spray arm (6); an upper spray arm (7); a multiport valve (10) that has a first outlet (8) that provides the delivery of the washing water pressurized by the circulation pump (5) to the lower spray arm (6) and a second outlet (9) that provides the delivery of the same to the upper spray arm (7); and a heat pump system (11) that provides the heating of the washing water.

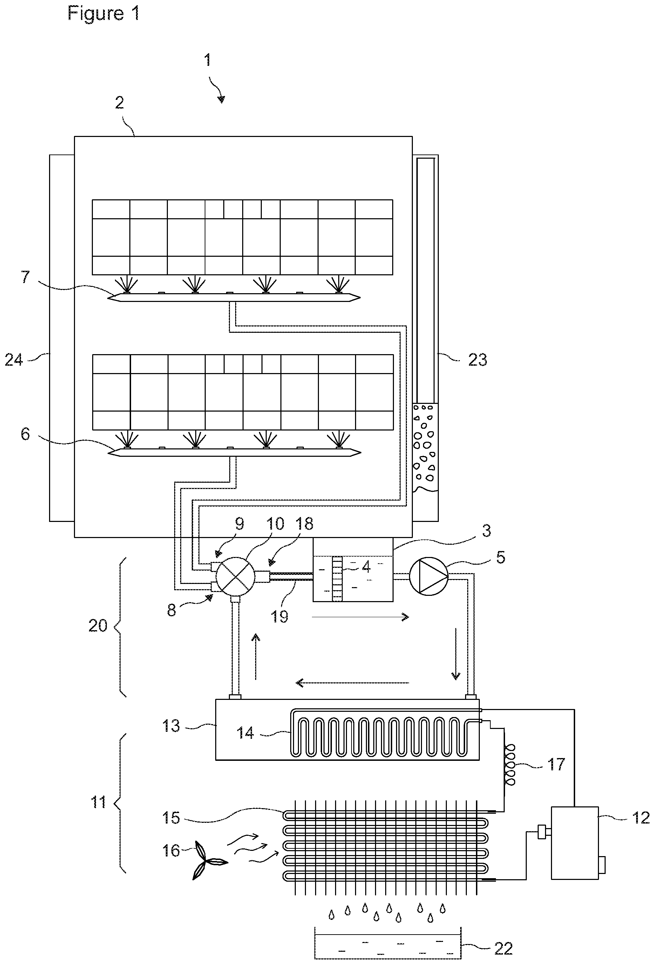

The heat pump system (11) comprises a compressor (12) that performs the refrigerant cycle; a condenser receptacle (13) wherein the water taken from the sump (3) by means of the circulation pump (5) is collected; a condenser (14) that is disposed in the condenser receptacle (13) and that is used for heating the washing water; an evaporator (15) that enables heat to be drawn from the outer environment and to transfer the same to the condenser (14) by means of the compressor (12); at least one evaporator fan (16) that provides the heat transfer by blowing the ambient air onto the evaporator (15), and an expansion element (17), for example a capillary tube or an expansion valve, that provides the expansion of the refrigerant flowing from the condenser (14) to the evaporator (15) (Figure 1).

The condenser (14) in the heat pump system (11) is used for heating the water used in washing processes and taken into the condenser receptacle (13) from the sump (3) by means of the circulation pump (5).

The dishwasher (1) of the present invention comprises a condenser washing line (20) that directs the clean water filled into the sump (3) to the condenser receptacle (13) by means of the circulation pump (5) for washing the condenser (14), that returns the water leaving the condenser receptacle (13) with the pressure applied by the circulation pump (5) back to the sump (3) by means of a third outlet (18) on the multiport valve (10) and a bypass pipe (19) such that the condenser (14) is washed with the continuous cycle (recirculation) of the water between the sump (3) and the condenser receptacle (13) (Figure 1).

The sump (3) is filled with the clean water for the purpose of washing the condenser (14), taken from the mains and/or obtained as a result of condensation during the washing/drying operations with the exception of main wash period. The clean water in the sump (3) is sent into the condenser receptacle (13) by means of the circulation pump (5). The water used for washing the condenser (14) leaves the condenser receptacle (13) with the pressure applied by the circulation pump (5) and reaches the multiport valve (10) so as to be sent back to the sump (3) by means of the third outlet (18) on the multiport valve (10) and the bypass pipe (19), thus providing the continuous cycle of the water used for washing the condenser (14).

The condenser washing line (20) is activated by the control unit (not shown in figures) periodically or when the level of dirtiness of the condenser (14) is detected to increase, after the main washing process or at the beginning of the drying step in the dishwasher (1). In the dishwasher (1), when the dirt on the condenser (14) surface is desired to be cleaned, the control unit first provides the intake of clean water into the sump (3), then operates the circulation pump (5) and activates the condenser washing line (20) by opening the third outlet (18) of the multiport valve (10). When the condenser washing line (20) is active, the first outlet (8) and the second outlet (9) of the multiport valve (10) that deliver water to the lower spray arm (6) and the upper spray arm (7) respectively are closed. After the condenser (14) is washed, the water used in the washing process is discharged.

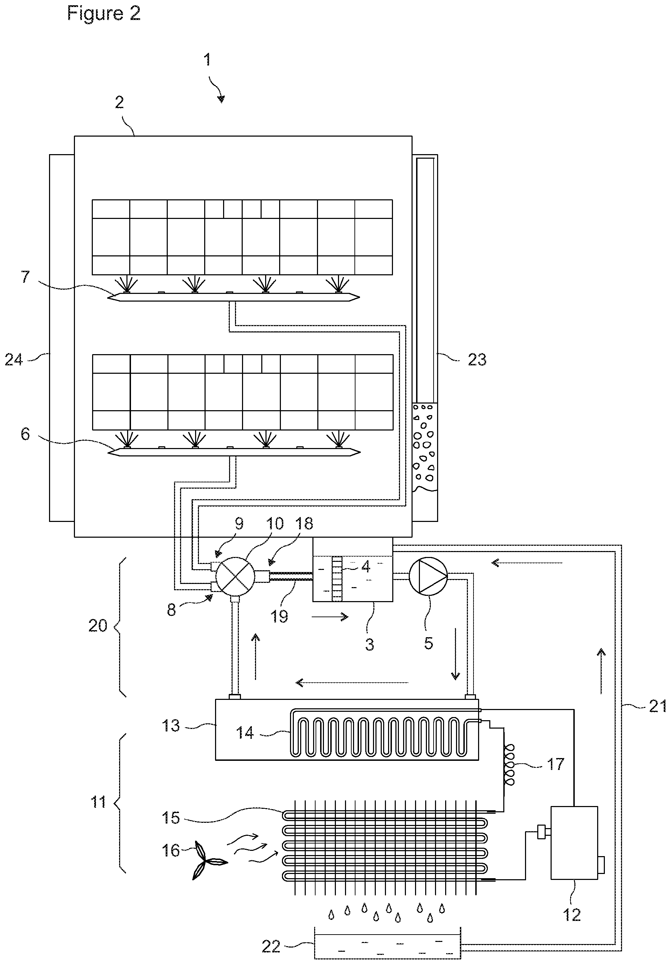

In an embodiment of the present invention, the dishwasher (1) comprises an evaporator condensation receptacle (22) that is disposed under the evaporator (15) and wherein the water condensing on the evaporator (15) surface is collected, and a water supply line (21) that enables the water in the evaporator condensation receptacle (22) to be sent to the sump (3) in order to be used in the condenser washing line (20) (Figure 2).

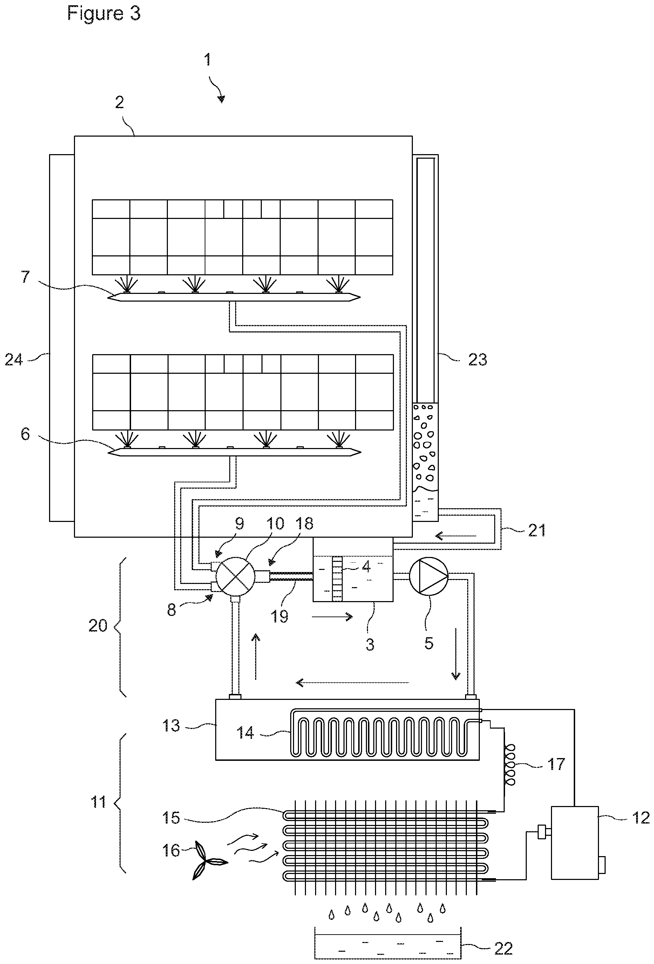

In another embodiment of the present invention, the dishwasher (1) comprises a drying duct (23) that takes the humid air in the tub (2) out of the tub (2) after the washing process to be circulated and thus enables the washed items to be dried, and a water supply line (21) that enables the water condensing in the drying duct (23) to be sent to the sump (3) in order to be used in the condenser washing line (20) (Figure 3).

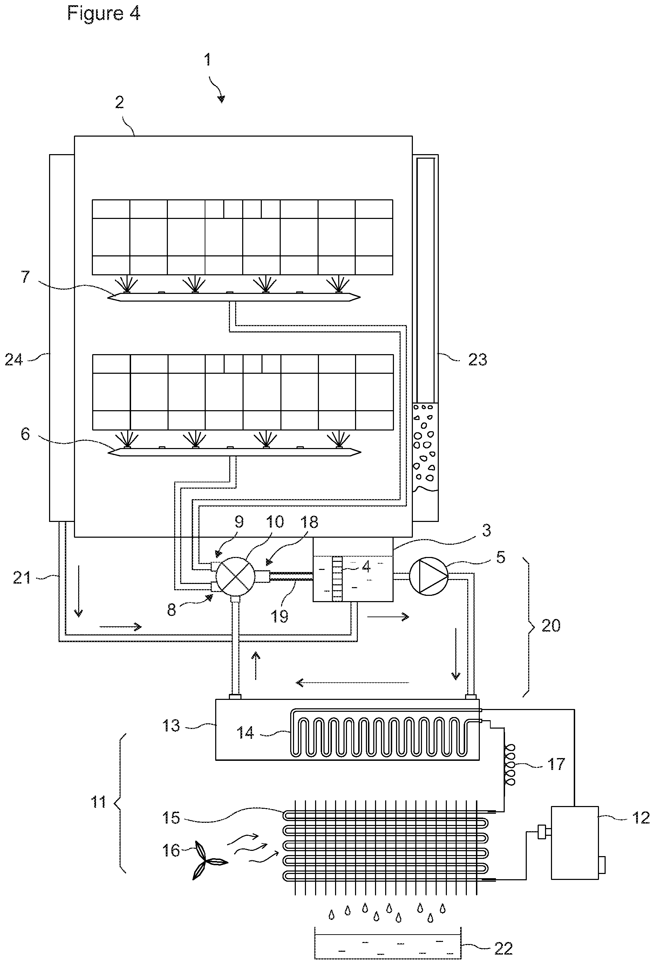

In another embodiment of the present invention, the dishwasher (1) comprises a water tank (24) that enables the water to be collected before the washing process and brought to the ambient temperature and thus shortening the water heating time during the washing process and providing savings in energy, and a water supply line (21) that delivers the water in the water tank (24) to be sent to the sump (3) in order to be used in the condenser washing line (20) (Figure 4).

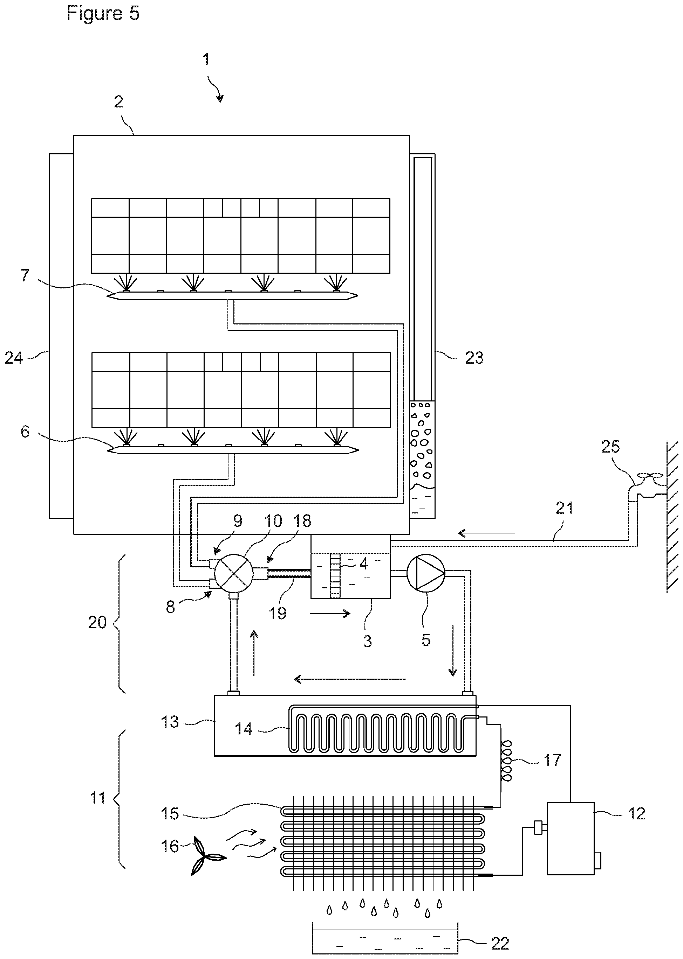

In another embodiment of the present invention, the dishwasher (1) comprises a water supply line (21) that enables the water taken from the mains tap (25) to be directly sent to the sump (3) - without being sent to the tub (2) - in order to be used in the condenser washing line (20) (Figure 5).

In an embodiment of the present invention, when the condenser washing line (20) is activated, the control unit increases the speed of the circulation pump (5) with respect to the normal washing operation, thus providing the passage of water over the condenser (14) at a high flow rate. Thus, the dirt stuck onto the condenser (14) surface and the inner surfaces of the condenser receptacle (13) is removed with the high water flow rate and carried to the filter (4) in the sump (3). The dirt in the filter (4) is cleaned with the state of the art methods.

In another embodiment of the present invention, the condenser washing line (20) is activated by the control unit when the dishwasher (1) is first operated and before the beginning of the washing process, and is used for quickly heating the washing water by the condenser (14). Thus, the washing process starts with the water in the sump (3) that is preheated by being passed over the condenser (14), and the duration of the washing process is shortened.

In the dishwasher (1) of the present invention, the dirt accumulated on the condenser (14) and in the condenser receptacle (13) wherein the condenser (14) is placed is removed by means of the condenser washing line (20). The performance of the condenser (14) and hence of the heat pump system (11) is increased, shortening the duration of the washing process.

## Claims

1. - A dishwasher (1) **comprising** a tub (2); a sump (3) that is disposed at the lower part of the tub (2) and wherein the washing water is collected; a filter (4) that is disposed in the sump (3); a circulation pump (5) that provides the delivery of the washing water in the sump (3) into the washing environment in the tub (2); a lower spray arm (6); an upper spray arm (7); a multiport valve (10) that has a first outlet (8) that provides the delivery of the washing water to the lower spray arm (6) and a second outlet (9) that provides the delivery of the same to the upper spray arm (7); a heat pump system (11); a compressor (12), a condenser receptacle (13), a condenser (14); an evaporator (15); a condenser washing line (20) that directs clean water filled into the sump (3) to the condenser receptacle (13), that returns the water leaving the condenser receptacle (13) with the pressure applied by the circulation pump (5) back to the sump (3) by means of a third outlet (18) on the multiport valve (10) and a bypass pipe (19) such that the condenser (14) is washed with the continuous cycle of the water between the sump (3) and the condenser receptacle (13); and a control unit being configured for activating the condenser washing line (20) by opening the third outlet (18) of the multiport valve (10) and closing the first outlet (8) and the second outlet (9);
**characterized by** the control unit being configured to increase the speed of circulation pump (5) with respect to the normal washing process when the condenser washing line (20) is activated and activate the condenser washing line (20) periodically or when the level of dirtiness of the condenser (14) is detected to increase, after the main washing process or at the beginning of the drying step in the dishwasher (1).

2. - A dishwasher (1) as in Claim 1, **characterized by** an evaporator condensation receptacle (22) that is disposed under the evaporator (15) and wherein the water condensing on the evaporator (15) surface is collected, and a water supply line (21) that enables the water in the evaporator condensation receptacle (22) to be sent to the sump (3) in order to be used in the condenser washing line (20).

3. - A dishwasher (1) as in Claim 1, **characterized by** a drying duct (23) that takes the humid air in the tub (2) out of the tub (2) after the washing process to be circulated and thus enables the washed items to be dried, and a water supply line (21) that enables the water condensing in the drying duct (23) to be sent to the sump (3) in order to be used in the condenser washing line (20).

4. - A dishwasher (1) as in Claim 1, **characterized by** a water tank (24) that enables the water to be collected before the washing process and brought to the ambient temperature and thus shortening the water heating time during the washing process, and a water supply line (21) that delivers the water in the water tank (24) to be sent to the sump (3) in order to be used in the condenser washing line (20).

5. - A dishwasher (1) as in Claim 1, **characterized by** a water supply line (21) that enables the water taken from the mains tap (25) to be directly sent to the sump (3) in order to be used in the condenser washing line (20).

6. - A dishwasher (1) as in Claim 1, **characterized by** the condenser washing line (20) that is activated together with the heat pump system (11) before the start of the washing process and that provides the quick heating of the washing water.

## Patentansprüche

1. - Eine Geschirrspülmaschine (1) **umfasst** eine Wanne (2); einen Sumpf (3), der am unteren Teil der Wanne (2) angeordnet ist und in dem das Waschwasser gesammelt wird; einen Filter (4), der im Sumpf (3) angeordnet ist; eine Umwälzpumpe (5), die für die Förderung des Waschwassers im Sumpf (3) in die Waschumgebung in der Wanne (2) sorgt; einen unteren Sprüharm (6); einen oberen Sprüharm (7); ein Mehrwegeventil (10), das einen ersten Auslass (8) aufweist, der die Abgabe des Waschwassers an den unteren Sprüharm (6) ermöglicht, und einen zweiten Auslass (9), der die Abgabe desselben an den oberen Sprüharm (7) ermöglicht; ein Wärmepumpensystem (11); einen Kompressor (12), einen Kondensatorbehälter (13), einen Kondensator (14); einen Verdampfer (15); eine Kondensatorwaschleitung (20), die in den Sumpf (3) eingefülltes sauberes Wasser zum Kondensatorbehälter (13) leitet, der das aus dem Kondensatorbehälter (13) austretende Wasser mit dem von der Umwälzpumpe (5) ausgeübten Druck zurück zum Sumpf (3) führt; mittels eines dritten Auslasses (18) am Mehrwegeventil (10) und einer Bypassleitung (19), so dass der Kondensator (14) mit dem kontinuierlichen Kreislauf des Wassers zwischen dem Sumpf (3) und dem Kondensatorbehälter (13) gewaschen wird; und eine Steuereinheit, die zum Aktivieren der Kondensatorwaschleitung (20) durch Öffnen des dritten Auslasses (18) des Mehrwegeventils (10) und Schließen des ersten Auslasses (8) und des zweiten Auslasses (9) konfiguriert ist; **gekennzeichnet ist sie dadurch**, dass die Steuereinheit so konfiguriert ist, dass sie die Drehzahl der Umwälzpumpe (5) gegenüber dem normalen Waschvorgang erhöht, wenn die Kondensatorwaschleitung (20) aktiviert wird und die Kondensatorwaschleitung (20) periodisch oder dann, wenn festgestellt wird, dass der Verschmutzungsgrad des Kondensators (14) zunimmt, nach dem Hauptwaschvorgang oder zu Beginn des Trocknungsschritts in der Geschirrspülmaschine (1) zu aktivieren.

2. - Eine Geschirrspülmaschine (1), wie in Anspruch 1 aufgeführt, **ist dadurch gekennzeichnet, dass** ein Verdampfer-Kondensationsbehälter (22), der unter dem Verdampfer (15) angeordnet ist und in dem das auf der Oberfläche des Verdampfers (15) kondensierende Wasser gesammelt wird, und eine Wasserversorgungsleitung (21), die es ermöglicht, das Wasser im Verdampferkondensationsbehälter (22) zum Sumpf (3) zu leiten, um in der Kondensatorwaschleitung (20) verwendet zu werden.

3. - Eine Geschirrspülmaschine (1), wie in Anspruch 1 aufgeführt, **ist dadurch gekennzeichnet, dass** ein Trocknungskanal (23), der nach dem Waschvorgang die feuchte Luft in der Wanne (2) aus der Wanne (2) herausführt, umgewälzt wird und so eine Trocknung des Spülguts ermöglicht, und eine Wasserversorgungsleitung (21), die es ermöglicht, das im Trocknungskanal (23) kondensierte Wasser zum Sumpf (3) zu leiten, um in der Kondensatorwaschleitung (20) verwendet zu werden.

4. - Eine Geschirrspülmaschine (1), wie in Anspruch 1 aufgeführt, **ist dadurch gekennzeichnet, dass** ein Wassertank (24) es ermöglicht, das Wasser vor dem Waschvorgang gesammelt und auf Umgebungstemperatur gebracht werden soll und somit die Wassererwärmungszeit während des Waschvorgangs verkürzt wird, und eine Wasserversorgungsleitung (21), die das Wasser im Wassertank (24) liefert, um es zum Sumpf (3) zu leiten, um es in der Kondensatorwaschleitung (20) zu verwenden.

5. - Eine Geschirrspülmaschine (1), wie in Anspruch 1 aufgeführt, **ist dadurch gekennzeichnet, dass** eine Wasserversorgungsleitung (21) ermöglicht, dass das vom Haupthahn (25) entnommene Wasser direkt zum Sammelbehälter (3) geleitet werden kann, um in der Kondensatorwaschleitung (20) verwendet zu werden.

6. - Eine Geschirrspülmaschine (1), wie in Anspruch 1 aufgeführt, **ist dadurch gekennzeichnet, dass** die Kondensatorwaschleitung (20) zusammen mit dem Wärmepumpensystem (11) vor Beginn des Waschvorgangs aktiviert wird und für die schnelle Erwärmung des Waschwassers sorgt.

## Revendications

1. - Un lave-vaisselle (1) **comprenant** une cuve (2) ; un puisard (3) disposé dans la partie inférieure de la cuve (2) et dans lequel l'eau de lavage est recueillie ; un filtre (4) disposé dans le puisard (3) ; une pompe de circulation (5) qui assure l'acheminement de l'eau de lavage dans le puisard (3) vers l'environnement de lavage dans la cuve (2) ; un bras d'aspersion inférieur (6) ; un bras d'aspersion supérieur (7) ; une vanne multivoies (10) dotée d'une première sortie (8) qui assure l'acheminement de l'eau de lavage vers le bras d'aspersion inférieur (6) et d'une seconde sortie (9) qui assure l'acheminement de cette même eau vers le bras d'aspersion supérieur (7) ; un système de pompe à chaleur (11) ; un compresseur (12), un réceptacle de condensateur (13), un condensateur (14) un évaporateur (15) une ligne de lavage du condenseur (20) qui dirige l'eau propre remplie dans le puisard (3) vers le récipient du condenseur (13), qui renvoie l'eau quittant le récipient du condenseur (13) avec la pression appliquée par la pompe de circulation (5) vers le puisard (3) au moyen d'une troisième sortie (18) sur la vanne multivoies (10) et d'un tuyau de dérivation (19) de manière à ce que le condenseur (14) soit lavé par le cycle continu de l'eau entre le puisard (3) et le récipient du condenseur (13) ; et une unité de commande configurée pour activer la ligne de lavage du condenseur (20) en ouvrant la troisième sortie (18) de la vanne multivoies (10) et en fermant la première sortie (8) et la deuxième sortie (9) ; **caractérisé par le fait que** l'unité de commande est configurée pour augmenter la vitesse de la pompe de circulation (5) par rapport au processus de lavage normal lorsque la ligne de lavage du condenseur (20) est activée et pour activer la ligne de lavage du condenseur (20) périodiquement ou lorsque le niveau de saleté du condenseur (14) est détecté comme augmentant, après le processus de lavage principal ou au début de l'étape de séchage dans le lave-vaisselle (1).

2. - Un lave-vaisselle (1) selon la déclaration 1, **caractérisé par** un réceptacle de condensation de l'évaporateur (22) qui est disposé sous l'évaporateur (15) et dans lequel l'eau se condensant sur la surface de l'évaporateur (15) est recueillie, et une conduite d'alimentation en eau (21) qui permet d'envoyer l'eau dans le réceptacle de condensation de l'évaporateur (22) vers le puisard (3) afin de l'utiliser dans la conduite de lavage du condenseur (20).

3. - Un lave-vaisselle (1) selon la déclaration 1, **caractérisé par** un conduit de séchage (23) qui fait sortir l'air humide de la baignoire (2) après le lavage pour le faire circuler et permettre ainsi le séchage des articles lavés, et une conduite d'alimentation en eau (21) qui permet d'envoyer l'eau se condensant dans le conduit de séchage (23) vers le puisard (3) afin de l'utiliser dans la conduite de lavage à condensateur (20).

4. - Un lave-vaisselle (1) selon la déclaration 1, **caractérisé par** un réservoir d'eau (24) qui permet de recueillir l'eau avant le processus de lavage et de l'amener à la température ambiante et ainsi de raccourcir le temps de chauffage de l'eau pendant le processus de lavage, et une conduite d'alimentation en eau (21) qui achemine l'eau du réservoir d'eau (24) pour l'envoyer dans le puisard (3) afin de l'utiliser dans la conduite de lavage du condenseur (20).

5. - Un lave-vaisselle (1) selon la déclaration 1, **caractérisé par** une conduite d'alimentation en eau (21) qui permet d'envoyer directement l'eau prélevée au robinet du réseau (25) dans le puisard (3) afin de l'utiliser dans la conduite de lavage à condensateur (20).

6. - Un lave-vaisselle (1) selon la déclaration 1, **caractérisé par** la ligne de lavage à condensateur (20) qui est activée conjointement avec le système de pompe à chaleur (11) avant le début du processus de lavage et qui assure le chauffage rapide de l'eau de lavage.
